# EUROPÄISCHE PATENTSCHRIFT

(11) **EP 3 844 576 B1**
(45) Veröffentlichungstag und Bekanntmachung des Hinweises auf die Patenterteilung: **25.03.2026**
(21) Anmeldenummer: 19761810.1
(22) Anmeldetag: 27.08.2019
(51) Int. Cl.: G05B 19/042, G05B 19/409

(54) **VERFAHREN UND SYSTEM ZUM SCHUTZ VON AUSFÜHR- UND/ODER BEARBEITUNGSDATEN EINER WERKZEUGMASCHINE**
METHOD AND SYSTEM FOR PROTECTING EXECUTION DATA AND/OR PROCESSING DATA OF A MACHINE TOOL
PROCÉDÉ ET SYSTÈME DE PROTECTION DE DONNÉES D'EXÉCUTION ET/OU D'USINAGE D'UNE MACHINE-OUTIL

(30) Priorität: 31.08.2018 DE 102018214840
(43) Veröffentlichungstag der Anmeldung: 07.07.2021
(73) Patentinhaber: DMG MORI Digital GmbH, 33689 Bielefeld (DE)
(72) Erfinder: Tarnofsky, Michael, 87663 Lengenwang (DE); Rudzio, Holger, 49507 Lotte (DE)
(74) Vertreter: MERH-IP Matias Erny Reichl Hoffmann Patentanwälte PartG mbB
(86) Internationale Anmeldenummer: PCT/EP2019/072840
(87) Internationale Veröffentlichungsnummer: WO 2020/043723

(56) Entgegenhaltungen:
- EP-A1- 3 232 604
- EP-A1- 3 232 604
- DE-A1- 10 125 383
- DE-A1- 10 125 383
- DE-T5- 112012 006 329
- DE-T5- 112012 006 329

## Beschreibung

Die vorliegende Erfindung betrifft ein Verfahren, ein System und ein Computerprogrammprodukt zum Bereitstellen von Bearbeitungsdaten an einer numerisch gesteuerten Werkzeugmaschine.

### Hintergrund

Im Stand der Technik sind numerisch gesteuerte Werkzeugmaschinen, z.B. Fräsmaschinen, Drehmaschinen, Schleifmaschinen, Fräs-/Drehmaschinen und Bearbeitungszentren, bekannt, die dazu eingerichtet sind, an Einspannmitteln der Werkzeugmaschine eingespannte Werkstücke mit einem Werkzeug oder mehreren Werkzeugen zu bearbeiten.

Dies erfolgt zumeist zumindest teilweise auf Basis von Bearbeitungsprogrammen, sog. NC-Programmen (NC für Numerical Control, bzw. CNC für Computerized Numerical Control), die an der Steuerungseinrichtung der Werkzeugmaschine ausgeführt werden. Die NC-Programme geben dabei zumeist Bearbeitungsbefehle, Bearbeitungsschritte und/oder Bearbeitungsbahnen vor, die von der Steuerungseinrichtung verarbeitet werden, derart, dass von der Maschinensteuerung auf Grundlage des ausgeführten Bearbeitungsprogramms steuerbare Aktoren der Werkzeugmaschine, wie z.B. Achsantriebe, wie z.B. Spindelantriebe und Vorschubachsantriebe oder andere Antriebssysteme der Werkzeugmaschine, wie z.B. Elektrik-, Hydraulik- und/oder Pneumatiksysteme gesteuert werden.

Steuerbare Komponenten, Einheiten bzw. Systeme der Werkzeugmaschine können eine oder mehrere Arbeitsspindeln der Werkzeugmaschine und eine oder zumeist mehrere Vorschubachsen der Werkzeugmaschine umfassen, wie z.B. lineare Vorschubachsen oder auch Rundachsen bzw. Schwenkachsen, zum Steuern einer Relativbewegung des Werkzeugs relativ zu dem zu bearbeitenden Werkstück. Weitere Steuerbare Komponenten, Einheiten bzw. Systeme der Werkzeugmaschine können sein: ein Werkstückpalettenwechsler der Werkzeugmaschine, ein Spänefördersystem der Werkzeugmaschine, ein Werkzeugwechselsystem der Werkzeugmaschine mit einem oder mehreren Werkzeugwechslern, ggf. in Kombination mit einem oder mehreren Werkzeugmagazinen, ein Kühlschmierstoff-Zuleitungssystem bzw. Kühlschmierstoff-Kreislaufsystem, automatisch öffen- bzw. schließbare Türen oder Klappen der Werkzeugmaschine, usw.

Heutzutage umfassen Steuersysteme von Werkzeugmaschinen neben einer bekannten an der Werkzeugmaschine integrierten NC-Steuerung (z.B. CNC-Maschinensteuerungen von Siemens, Heidenhain, Fanuc, und weiteren Maschinensteuerungsanbietern) und verbundenen PLC-Steuerungen zudem noch weitere erweiterte Steuerungs- bzw. Bedienfunktionen, die typischerweise auf dem Bedienpult der Werkzeugmaschine realisiert sind.

Derartige Bedienpulte von numerisch gesteuerten Werkzeugmaschinen umfassen typischerweise eine graphische Benutzeroberfläche mit einem oder mehreren Bildschirmen, ggf. sogar einem Touch- Bildschirm mit Touch-Steuerung bzw. Touch-Bedienfunktionen, und Eingabeeinheiten, wie z.B. Schaltern, Reglerrädern und Tasten bzw. auch ggf. eine Tastatur oder andere von Computersteuerungen bekannte Eingabeeinrichtungen, durch die ein Bediener auf die Steuerungs- und Bedienfunktionen der Werkzeugmaschine zugreifen kann.

Die WO 2015/014390 A1 betrifft ein Steuerungs- und Bediensystem einer numerisch gesteuerten Werkzeugmaschine, bei der die Maschinensteuerung mit einer derartigen erweiterten Funktionalität ausgestattet ist. Einerseits umfasst das Steuerungs- und Bediensystem die Maschinensteuerungsfunktionen der integrierten NC-Steuerung und andererseits umfasst das Steuerungs- und Bediensystem ein darüber liegendes Datenverarbeitungssystem, das die graphische Benutzeroberfläche ausführt und an dem Bedienpult dem Bediener bereitstellt und das eine Mehrzahl von Steuerungs- und Bedienprogrammen ausführt bzw. ausführbar bereitstellt, die die Einricht-, Bedien- und Steuerungsfunktionen der Werkzeugmaschine erweitern.

Des Weiteren stellt das höherliegende Datenverarbeitungssystem an der Werkzeugmaschine die Funktionalität bereit, dass Sensordaten der Werkzeugmaschine ausgelesen, angezeigt, und weiterverarbeitet werden können und an extern verbundene Datenverarbeitungseinrichtungen, wie z.B. Computer- und/oder Servereinrichtungen übergeben werden können, z.B. über ein verbundenes Datennetzwerk.

Weiterhin ist es auch möglich, von derartigen extern verbundenen Datenverarbeitungseinrichtungen, wie z.B. Computer- und/oder Servereinrichtungen, Daten, wie z.B. Einrichtdaten, Werkzeugdaten, Werkstückdaten, Bearbeitungsdaten, Bearbeitungsprogramme oder auch Installationsdaten für weitere installierbare Steuer- und/oder Bedienprogramme an die Steuerungseinrichtung der Werkzeugmaschine zu übermitteln.

Hierdurch ergibt sich die Möglichkeit, dass vorgegebene Bearbeitungsdaten betreffend die Bearbeitung von einem oder mehreren Werkstücken von einem Auftragsgeber vorgegeben werden und direkt, über ein Netzwerk, an die Steuerungseinrichtung einer Werkzeugmaschine eines Auftragsnehmers übermittelt wird, um die Bearbeitung des Werkstücks bzw. der Werkstücke an der Werkzeugmaschine direkt durchführen zu können. Hierzu können z.B. Daten aus ERP-(Enterprise-Resource-Planning)-Systemen und/oder von Datenverarbeitungen aus CAD/CAM-Systemen (CAD für Computer Aided Design, CAM für Computer Aided Manufacturing) bereitgestellt werden und an der Steuerungsdatenverarbeitungseinrichtung an einem vorgeschalteten Computer oder direkt an der Werkzeugmaschine eingelesen werden.

An der Werkzeugmaschine können die Daten geladen bzw. eingelesen werden, um durch den Bediener der Werkzeugmaschine verarbeitet oder ausgeführt zu werden. Dies hat den Vorteil, dass die Übertragung der Daten schnell und effizient an die Werkzeugmaschine ermöglicht wird, zur direkten und verzögerungsarmen Ausführung der vorgegebenen Bearbeitungsvorgänge Die Ausführung ist für den Bediener ausführbar, an der graphischen Benutzeroberfläche einsehbar, insbesondere ist der auszuführende NC-Code bzw. dessen Ausführung einsehbar, und der Bediener hat an der Maschinensteuerung die Möglichkeit des Eingriffs in die Bearbeitung.

Die EP 3 232 604 A1 zeigt ein Verfahren bei dem ein Verschlüsselungsschlüsselpaar für eine industrielle Steuerung erzeugt wird, wobei das Verschlüsselungsschlüsselpaar einen öffentlichen Schlüssel und einen privaten Schlüssel umfasst. Der private Schlüssel wird in einem sicheren Speichersystem des industriellen Steuergeräts gespeichert. Der Inhalt des Steuerungsprogramms wird dann mit dem öffentlichen Schlüssel verschlüsselt, um einen verschlüsselten Steuerungsinhalt zu erzeugen. Der verschlüsselte Steuerungsinhalt wird dann der industriellen Steuerung bereitgestellt, und die industrielle Steuerung ist so konfiguriert, dass sie den verschlüsselten Steuerungsinhalt unter Verwendung des privaten Schlüssels entschlüsselt und den Steuerungsprogramminhalt ausführt.

Die DE 101 25 383 A1 zeigt, dass zum Schutz von Steuerungsprogrammen gegen unbefugte Analyse und Benutzung beim Transport über öffentliche Netze asymmetrische Schlüssel verwendet werden. Nach der Erstellung des Steuerungsprogramms im Engineeringsystem des Lieferanten wird das Programm in einem Postprozessor verschlüsselt und in einen öffentlichen Webserver exportiert. Der Kunde lädt das verschlüsselte Programm in seine persistente Datenhaltung, importiert es in sein Engineeringsystem und kann es dort zum Parametrieren des Steuerungssystems editieren. Erst nach dem Editieren werden die verschlüsselten Programmteile in einem Pre-Prozessor entschlüsselt und zum Compiler weitergeleitet.

Die DE 11 2012 006329 T5 zeigt eine speicherprogrammierbare Steuerung umfassend eine Vorrichtung, welche darauf Daten speichert, eine Authentifikationsinformationen-Speichereinheit, welche darauf Authentifikationsinformationen speichert, eine Authentifikationsfunktionseinheit, welche eine Benutzerauthentifikation basierend auf den Authentifikationsinformationen ausführt, und ein Verschlüsselungsfilter, welches eine Vielzahl von Verschlüsselungsmustern aufweist, wobei eines davon vorab durch einen Benutzer für eine Verschlüsselungsverarbeitung eingestellt wird. Wenn ein Schreiben von Daten auf die Vorrichtung durch eine externe Vorrichtung angefragt wird, führt die Authentifikationsfunktionseinheit die Benutzerauthentifikation aus, veranlasst das Verschlüsselungsfilter, wenn die Benutzerauthentifikation erfolgreich ist, die Verschlüsselungsverarbeitung an den auf die Vorrichtung zu schreibenden Daten mit dem vorab durch den Benutzer eingestellten Verschlüsselungsmuster auszuführen, so dass die Daten auf die Vorrichtung geschrieben werden, und veranlasst das Verschlüsselungsfilter, wenn die Benutzerauthentifikation fehlschlägt, die Verschlüsselungsverarbeitung an den auf die Vorrichtung zu schreibenden Daten mit einem der Verschlüsselungsmuster, welches sich von dem vorab durch den Benutzer eingestellten Verschlüsselungsmuster unterscheidet, auszuführen, so dass die Daten auf die Vorrichtung geschrieben werden.

Ausgehend von dem vorstehend beschriebenen Stand der Technik ist es eine Aufgabe der vorliegenden Erfindung, ein Verfahren und ein System zum Bereitstellen von Bearbeitungsdaten an einer numerisch gesteuerten Werkzeugmaschine vorzuschlagen, das die Möglichkeiten und Funktionalitäten der Übergabe von Bearbeitungsdaten von externen Datenverarbeitungsanlagen an eine Werkzeugmaschinensteuerung und die Ausführung von den Bearbeitungsdaten an der Werkzeugmaschine weiterentwickelt und verbessert.

### Zusammenfassung

Zur Lösung der vorstehend genannten Aufgaben werden ein Verfahren zum Bereitstellen von Bearbeitungsdaten an einer numerisch gesteuerten Werkzeugmaschine, ein System und ein Computerprogrammprodukt umfassend die Merkmale des jeweiligen unabhängigen Anspruchs gezeigt. Abhängige Ansprüche betreffen vorteilhafte bevorzugte Ausführungsbeispiele. Im Folgenden werden Aspekte und Ausführungsbeispiele erläutert, die für das Verständnis der Erfindung hilfreich sind.

Gemäß einem Aspekt kann ein Verfahren zum Bereitstellen von Bearbeitungsdaten an einer numerisch gesteuerten Werkzeugmaschine bereitgestellt werden, umfassend: das Bereitstellen von Bearbeitungsdaten an einer Datenverarbeitungseinrichtung, wobei die Bearbeitungsdaten bevorzugt numerische Steuerungsdaten, insbesondere bevorzugt ein oder mehrere NC-Programme, umfassen, auf deren Grundlage eine Bearbeitung eines Werkstücks an der numerisch gesteuerten Werkzeugmaschine ausführbar ist; das Vorgeben von Ausführungsvorgaben an der Datenverarbeitungseinrichtung, die bevorzugt Vorgaben für die Bearbeitung des Werkstücks an der numerisch gesteuerten Werkzeugmaschine angeben; das Erzeugen von Ausführungsdaten auf Grundlage der vorgegebenen Ausführungsvorgaben, wobei die Ausführungsdaten bevorzugt die Bearbeitungsdaten umfassen und/oder bevorzugt die Ausführungsvorgaben angeben; und/oder das Bereitstellen und/oder Übertragen der erzeugten Ausführungsdaten an einer/eine Steuerungseinrichtung der numerisch gesteuerten Werkzeugmaschine.

Bevorzugt umfasst das Verfahren weiterhin das Vorgeben von Verschlüsselungsvorgaben an der Datenverarbeitungseinrichtung, die Vorgaben für die Verschlüsselung der Bearbeitungsdaten und/oder der Ausführungsdaten, und das Verschlüsseln der Bearbeitungsdaten und/oder der Ausführungsdaten auf Grundlage der Verschlüsselungsvorgaben. Die Ausführungsdaten können verschlüsselt und/oder mit verschlüsselten Bearbeitungsdaten an der/die Steuerungseinrichtung der numerisch gesteuerten Werkzeugmaschine bereitgestellt und/oder übertragen werden.

Das Verschlüsseln der Bearbeitungsdaten und/oder der Ausführungsdaten wird bevorzugt mittels eines der numerisch gesteuerten Werkzeugmaschine zugeordneten Public-Keys in einem asymmetrischen Verschlüsselungsverfahren ausgeführt.

Die Verschlüsselungsvorgaben geben bevorzugt an, ob die Bearbeitungsdaten und/oder die Ausführungsdaten zu verschlüsseln sind bzw. welche Abschnitte der Bearbeitungsdaten und/oder der Ausführungsdaten zu verschlüsseln sind.

Die Verschlüsselungsvorgaben geben bevorzugt eine anzuwendende Verschlüsselungsstärke an.

Die Verschlüsselungsvorgaben und/oder die Ausführungsvorgaben geben bevorzugt einen erlaubten Zeitraum an, in dem die verschlüsselten Bearbeitungsdaten und/oder Ausführungsdaten entschlüsselbar sind.

Die Verschlüsselungsvorgaben und/oder die Ausführungsvorgaben geben bevorzugt eine maximale Anzahl von erlaubten Entschlüsselungen der verschlüsselten Bearbeitungsdaten und/oder Ausführungsdaten und/oder eine maximale Anzahl von Ausführungen der Bearbeitungsdaten an.

Die Verschlüsselungsvorgaben und/oder die Ausführungsvorgaben geben bevorzugt an, ob die verschlüsselten Bearbeitungsdaten und/oder Ausführungsdaten nur direkt bei Anwendung in einem NC-Code-Ausführungssystem der Steuerungseinrichtung der numerisch gesteuerten Werkzeugmaschine entschlüsselbar sind.

Die Verschlüsselungsvorgaben und/oder die Ausführungsvorgaben geben bevorzugt an, ob die Bearbeitungsdaten und/oder Ausführungsdaten an einer graphischen Benutzeroberfläche der Steuerungseinrichtung der numerisch gesteuerten Werkzeugmaschine einsehbar und/oder editierbar sind.

Die Verschlüsselungsvorgaben und/oder die Ausführungsvorgaben geben bevorzugt an, ob die Steuerungseinrichtung der numerisch gesteuerten Werkzeugmaschine vor und/oder nach Bearbeitung des Werkstücks auf Grundlage der Bearbeitungsdaten eine Meldung an die Datenverarbeitungseinrichtung sendet.

Die Verschlüsselungsvorgaben und/oder die Ausführungsvorgaben geben bevorzugt an, ob die Steuerungseinrichtung der numerisch gesteuerten Werkzeugmaschine nach Bearbeitung des Werkstücks auf Grundlage der Bearbeitungsdaten Bearbeitungsberichtsdaten an die Datenverarbeitungseinrichtung sendet.

Die Verschlüsselungsvorgaben und/oder die Ausführungsvorgaben geben bevorzugt an, ob die Bearbeitungsberichtsdaten vor dem Übertragen an die Datenverarbeitungseinrichtung zu verschlüsseln sind.

Die Verschlüsselungsvorgaben und/oder die Ausführungsvorgaben geben bevorzugt an, ob die Steuerungseinrichtung der numerisch gesteuerten Werkzeugmaschine vor Entschlüsselung der verschlüsselten Bearbeitungsdaten und/oder Ausführungsdaten einen Berechtigungsantrag an die Datenverarbeitungseinrichtung sendet, zur Freigabe des Entschlüsselns durch die Datenverarbeitungseinrichtung nach erfolgter Berechtigungsüberprüfung.

Bevorzugt umfasst das Verfahren weiterhin das Einholen eines der Werkzeugmaschine zugeordneten Public-Keys oder anderer der Werkzeugmaschine zugeordneten Schlüsseldaten von einem externen Server, wobei die Bearbeitungsdaten und/oder die Ausführungsdaten bevorzugt anhand des von dem Server eingeholten Public-Keys oder der von dem Server eingeholten Schlüsseldaten verschlüsselt werden.

Bevorzugt umfasst das Verfahren weiterhin das Vorgeben von Authentifizierungsvorgaben an der Datenverarbeitungseinrichtung, die Vorgaben für die Authentifizierung der numerischen Werkzeugmaschine und/oder eines Bedieners der Werkzeugmaschine angeben, wobei die Ausführungsdaten bevorzugt weiterhin die Authentifizierungsvorgaben angeben.

Die Ausführungsvorgaben geben bevorzugt einen zulässigen Werkzeugmaschinentyp oder eine zulässige Werkzeugmaschine an.

Die Ausführungsvorgaben geben bevorzugt eine erforderliche Maschinenausrüstung der Werkzeugmaschine, ein oder mehrere erforderliche Werkzeuge, und/oder Werkstückdaten an.

Gemäß einem weiteren Aspekt wird ein System zum Bereitstellen von Bearbeitungsdaten an einer numerisch gesteuerten Werkzeugmaschine voreschlagen, umfassend eine Datenverarbeitungseinrichtung, die dazu eingerichtet ist, ein Verfahren gemäß einem oder mehreren der vorstehenden Aspekte auszuführen.

Gemäß einem weiteren Aspekt wird ein Computerprogrammprodukt vorgeschlagen, umfassend Befehle, die bei der Ausführung des Programms durch einen Computer diesen veranlassen, das Verfahren gemäß einem oder mehreren der vorstehenden Aspekte auszuführen.

Gemäß einem weiteren Aspekt wird ein Verfahren zum Bereitstellen von Bearbeitungsdaten an einer numerisch gesteuerten Werkzeugmaschine vorgeschlagen, umfassend: Empfangen von nach einem Verfahren gemäß einem oder mehreren der vorstehenden Aspekte erzeugten Ausführungsdaten an der Steuerungseinrichtung der numerisch gesteuerten Werkzeugmaschine, Verarbeiten der Ausführungsdaten auf Grundlage der in den Ausführungsdaten umfassten Ausführungsvorgaben, optional mit Entschlüsseln der Ausführungsdaten und/oder der in den Ausführungsdaten umfassten Bearbeitungsdaten, und/oder Ausführen der Bearbeitungsdaten, insbesondere umfassend das Steuern der Bearbeitung des an der numerisch gesteuerten Werkzeugmaschine auf Grundlage der Bearbeitungsdaten.

Gemäß einem weiteren Aspekt wird eine Steuerungseinrichtung einer numerisch gesteuerten Werkzeugmaschine voreschlagen, wobei die Steuerungseinrichtung dazu eingerichtet ist, das vorstehende Verfahren, in Kombination mit einem oder mehreren der vorstehenden Aspekte, auszuführen.

Gemäß einem weiteren Aspekt wird ein Computerprogrammprodukt vorgeschlagen, umfassend Befehle, die bei der Ausführung des Programms durch eine Steuerungseinrichtung einer numerisch gesteuerten Werkzeugmaschine diese veranlassen, das vorstehende Verfahren, in Kombination mit einem oder mehreren der vorstehenden Aspekte, auszuführen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

Fig. 1 zeigt eine beispielhafte schematische Darstellung einer Datenverarbeitungsvorrichtung zum Bereitstellen von Bearbeitungsdaten an einer numerisch gesteuerten Werkzeugmaschine gemäß einem Ausführungsbeispiel der Erfindung.
Fig. 2 zeigt eine beispielhafte schematische Darstellung eines Systems zum Bereitstellen von Bearbeitungsdaten an einer numerisch gesteuerten Werkzeugmaschine gemäß einem Ausführungsbeispiel der Erfindung.
Fig. 3 zeigt eine beispielhafte schematische Darstellung eines Flussdiagrams eines Verfahrens zum Bereitstellen von Bearbeitungsdaten an einer numerisch gesteuerten Werkzeugmaschine gemäß einem Ausführungsbeispiel der Erfindung.
Fig. 4 zeigt eine beispielhafte schematische Darstellung eines Flussdiagrams eines Verfahrens zum Verarbeiten bereitgestellter Bearbeitungsdaten an einer numerisch gesteuerten Werkzeugmaschine gemäß einem Ausführungsbeispiel der Erfindung.
Fig. 5 zeigt eine beispielhafte schematische Darstellung eines Flussdiagrams eines Verfahrens zum Bereitstellen von Verschlüsselungszertifikaten gemäß einem Ausführungsbeispiel der Erfindung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

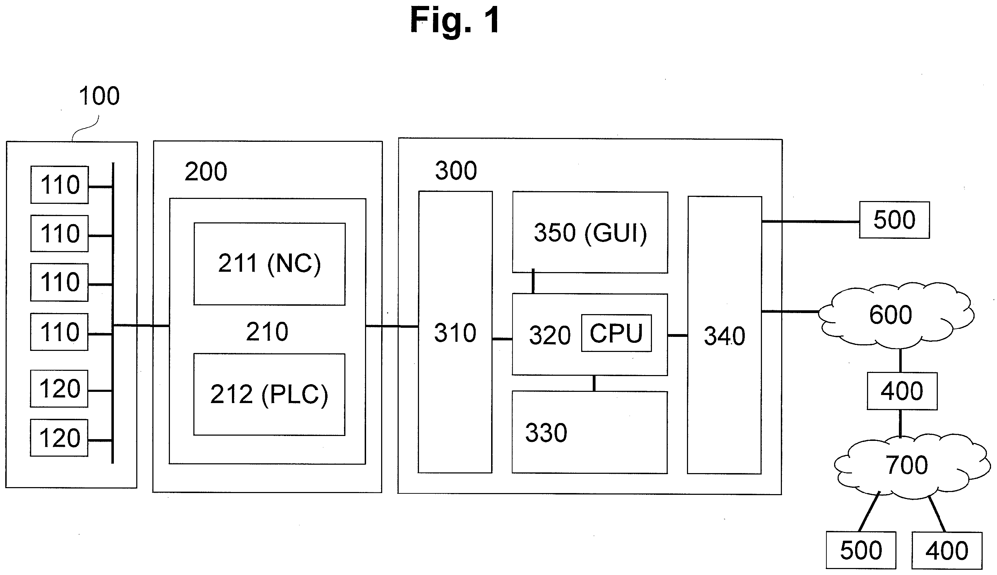

Fig. 1 zeigt eine beispielhafte schematische Darstellung einer Datenverarbeitungsvorrichtung 300 zum Bereitstellen von Bearbeitungsdaten an einer numerisch gesteuerten Werkzeugmaschine 100 gemäß einem Ausführungsbeispiel der Erfindung.

Die Datenverarbeitungsvorrichtung 300 (z.B. eine in einem Bedienpult der Werkzeugmaschine angeordnete Datenverarbeitungsvorrichtung oder eine mit dem Bedienpult der Werkzeugmaschine gekoppelte Datenverarbeitungsvorrichtung) ist mit einer Steuerung 200 der Werkzeugmaschine 100 verbunden und optional auch mit einer externen Datenverarbeitungseinrichtung 500 und über ein Kommunikationsnetzwerk 600 mit einem Server 400, der beispielhaft über ein weiteres Kommunikationsnetzwerk 700 (z.B. das Internet) mit einem weiteren Server 400 und einer weiteren externen Datenverarbeitungseinrichtung 500 verbunden ist. Die Datenverarbeitungsvorrichtung 300 bildet zusammen mit der Steuerung 200 die Steuereinrichtung der Werkzeugmaschine 100.

Die Werkzeugmaschine 100 umfasst beispielhaft eine Mehrzahl von durch die Steuerung 200 steuerbaren Aktoren 110 der Werkzeugmaschine 100 und eine Mehrzahl von Sensoren 120 zur Ausgabe von einen Maschinenzustand der Werkzeugmaschine 100 betreffenden Sensorsignalen an die Steuerung 200.

Die Aktoren 110 können z.B. Antriebe von steuerbaren Linear- und Rundachsen (Schwenk- und/oder Drehachsen) für eine gesteuerte Relativbewegung zwischen Werkzeug und Werkstück umfassen, und auch Antriebe von werkzeugtragenden Arbeitsspindeln (z.B. an Fräsmaschinen) bzw. werkstücktragenden Arbeitsspindeln (z.B. an Drehmaschinen). Des Weiteren können die Aktoren 110 elektronisch, hydraulisch und/oder pneumatisch gesteuerte Ventile, Pumpen oder andere Zuführeinrichtungen von interner oder externer Kühlschmierstoffzuführung bzw. Druckluftzuführungen sein. Fördereinrichtungen, Palettenwechsler, Werkstückwechlser, Werkzeugmagazine und anderes Werkzeugmaschinenzubehör kann zudem über Antriebe oder Schaltungen bzw. entsprechende Aktoren gesteuert werden.

Die Sensoren 120 können z.B. Sensoren sein, die jeweiligen Baugruppen oder Komponenten der Werkzeugmaschine zugeordnet sein können, z.B. den Achsen, den Antrieben, Achslagern, den Spindeln, Spindellagern, einem Werkzeugmagazin, einem Werkzeugwechsler, einem Paletten- oder Werkstückwechsler, einer internen oder externe Kühlschmiermittelzuführeinrichtung, einer Spänefördereinrichtung, und/oder einer Hydraulik- und/oder Pneumatik-Steuerung.

Die Steuerung 200 umfasst beispielhaft eine Steuerungsvorrichtung 210 mit einer NC-Steuerung 211 und einer speicherprogrammierbaren Steuerung 212 (auch SPS oder PLC für "Programmable Logic Control" genannt). Die Steuerung 200 ist mit der Werkzeugmaschine 100 verbunden, insbesondere um zum Steuern der Werkzeugmaschine 100 Steuersignale an die Aktoren 110 der Werkzeugmaschine ausgeben zu können und Sensorsignale der Sensoren 120 der Werkzeugmaschine 100 auslesen zu können.

Die Datenverarbeitungsvorrichtung 300 umfasst eine steuerungsseitige Datenschnittstelle 310 (Steuerungsschnittstelle) zur Daten- und Signalverbindung mit der Steuerung 200 und eine externe Datenschnittstelle 340 (Universalschnittstelle) zur Datenverbindung mit der externen Datenverarbeitungsvorrichtung 500 bzw. den Kommunikationsnetzwerk 600 zur Netzwerkverbindung mit dem Server 400.

Weiterhin umfasst die Datenverarbeitungsvorrichtung 300 eine CPU umfassende Datenverarbeitungseinheit 320 zur Verarbeitung von Daten und zum Ausführen von Anwendungen und Bearbeitungsprogrammen und eine Datenspeichereinrichtung 330 zum Speichern von Programm- bzw. Anwendungsdaten, Bearbeitungsdaten, Konfigurationsdaten und Sensordaten (z.B. Memory, RAM, Festplatte und/oder ein Flash-Speicher).

Weiterhin umfasst die Datenverarbeitungsvorrichtung 300 beispielhaft eine Mensch-Maschine-Schnittstelle 350 (auch HMI für "Human-Machine-Interface" genannt), mit der es einem Bediener der Werkzeugmaschine 100 ermöglicht ist, die Werkzeugmaschine 100 zu steuern, zu überwachen und/oder zu bedienen. Die Mensch-Maschine-Schnittstelle 350 umfasst beispielhaft eine auf einem Monitor oder Touchscreen anzeigbare graphische Benutzeroberfläche GUI (GUI für "Graphical User Interface").

Die Datenverarbeitungsvorrichtung 300 kann beispielhaft dazu eingerichtet sein, NC-Daten eines Bearbeitungsprogramms einzulesen, zu verarbeiten und auszuführen, insbesondere indem das NC-Programm ausgeführt wird und in dem NC-Programm angegebene Befehle durchzuführen, in dem NC-Programm angegebene Befehle zur Ausführung an die NC-Steuerung 211 und/oder der PLC-Steuerung 212 zu übertragen bzw. auf Grundlage der in dem NC-Programm angegebenen Befehle entsprechende Steuerungsbefehle bzw. -signale zur Ausführung an die NC-Steuerung 211 und/oder der PLC-Steuerung 212 zu Übertragen.

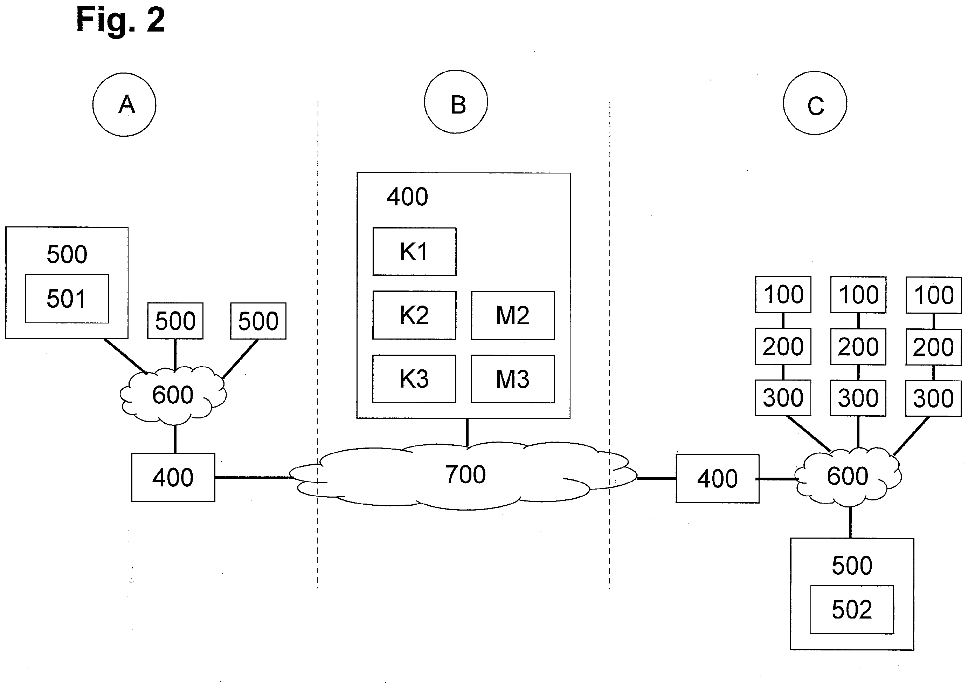

Fig. 2 zeigt eine beispielhafte schematische Darstellung eines Systems zum Bereitstellen von Bearbeitungsdaten an einer numerisch gesteuerten Werkzeugmaschine gemäß einem Ausführungsbeispiel der Erfindung.

Das System umfasst beispielhaft drei Bereiche A, B und C. Im Bereich A umfasst das System beispielhaft einen Server 400, der über ein beispielhaft internes Kommunikationsnetzwerk 600 des Bereichs A beispielhaft mit einer Mehrzahl von Datenverarbeitungseinrichtungen 500 des Bereichs A verbunden ist. Eine der Datenverarbeitungseinrichtungen 500 des Bereichs A ist beispielhaft mit einer Bearbeitungsdatenanwendung 501 ausgestattet, die bei Ausführung auf der Datenverarbeitungseinrichtung 500 dazu eingerichtet ist, Bearbeitungsdaten zur Bereitstellung an einer Werkzeugmaschine 100 zu verarbeiten.

Der Bereich A kann beispielsweise einem Auftraggeber zugeordnet sein, der die Bearbeitung von Werkstücken an Werkzeugmaschinen bei externen Auftragnehmern in Auftrag geben möchte.

Der Server 400 des Bereichs A ist beispielhaft weiterhin mit einem externen Kommunikationsnetzwerk 700 verbunden, insbesondere bevorzugt zum Übertragen von Bearbeitungsaufträgen an Auftragnehmer, z.B. über das Internet oder ein vergleichbares externes Kommunikationsnetzwerk mit beschränktem Teilnehmerumfang.

Im Bereich B umfasst das System beispielhaft einen weiteren Server 400, der auch beispielhaft mit dem externen Kommunikationsnetzwerk 700 verbunden ist. Der Server 400 des Bereichs B speichert beispielhaft Verschlüsselungs-Schlüsseldaten K1, K2 und K3 (z.B. Schlüssel zur Anwendung in asymmetrischen Verschlüsselungsverfahren, wie z.B. Public-Keys und/oder Private-Keys) und beispielhaft Maschinendaten M2 und M3, die Maschineninformationen für eine jeweils entsprechend assoziierte Werkzeugmaschine angeben, wie z.B. Eigenschaften, Konfiguration, Ausrüstung, Typ, und/oder Funktionalitäten der assoziierten Werkzeugmaschine.

Der Bereich B mit dem Server 400 des Bereichs 400 kann einem Maschinenhersteller oder einem zentralen Dienstleister zugeordnet sein. Der Server 400 des Bereichs 400 kann beispielsweise Daten für Teilnehmer des Systems zum Bereitstellen von Bearbeitungsdaten an Werkzeugmaschinen zentral bereitstellen.

Beispielhaft können die Verschlüsselungs-Schlüsseldaten K2 den Maschinendaten M2 und die Verschlüsselungs-Schlüsseldaten K3 den Maschinendaten M3 zugeordnet sein. Die Verschlüsselungs-Schlüsseldaten K1 können dem Server 400 des Bereichs A zugeordnet sein.

Im Bereich C umfasst das System beispielhaft einen weiteren Server 400, der auch beispielhaft mit dem externen Kommunikationsnetzwerk 700 verbunden ist. Der Server 400 des Bereichs C ist beispielhaft weiterhin mit einem internen Kommunikationsnetzwerk 600 des Bereichs C verbunden, an das weiterhin beispielhaft eine Datenverarbeitungseinrichtung 500 des Bereichs C angebunden ist.

Weiterhin sind beispielhaft Werkzeugmaschinen 100 über deren jeweilige Steuerung 200 und die daran verbundenen jeweiligen Datenverarbeitungseinrichtungen 300 an das internen Kommunikationsnetzwerk 600 des Bereichs C angebunden.

Der Bereich C kann beispielsweise einem Auftragnehmer zugeordnet sein, der von dem Auftraggeber des Bereichs A Aufträge für die die Bearbeitung von Werkstücken an Werkzeugmaschinen annehmen und ausführen möchte.

Beispielhaft weist die Datenverarbeitungseinrichtung 500 des Bereichs C eine Werkzeugmaschinen-Simulationsanwendung 502 auf, die dazu eingerichtet ist, durch Ausführung an der Datenverarbeitungseinrichtung 500 und auf Grundlage von Maschinendaten betreffend eine Werkzeugmaschine und Bearbeitungsdaten betreffend die Bearbeitung eines Werkstücks an der Werkzeugmaschine, die Bearbeitung des Werkstücks an der Werkzeugmaschine zu simulieren, insbesondere um eine Kollisionsprüfung bei der an der Werkzeugmaschine simulierten Bearbeitung durchzuführen. Eine entsprechende Werkzeugmaschinen-Simulationsanwendung 502 ist z.B. aus der DE 10 2006 043 390 A1 bekannt.

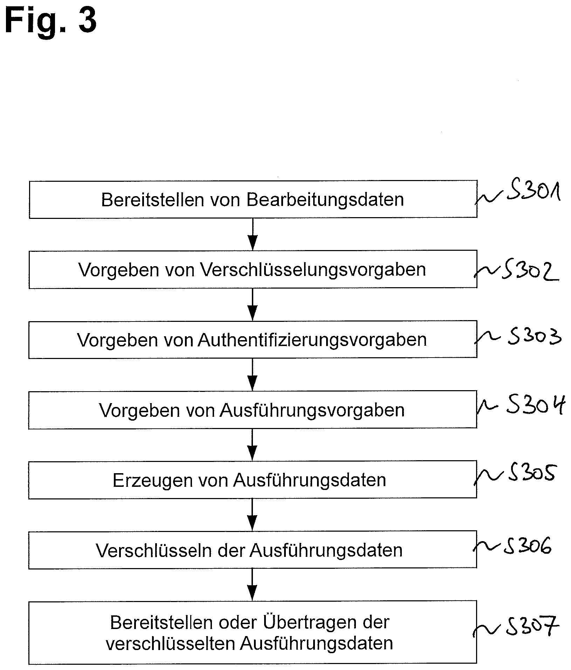

Fig. 3 zeigt eine beispielhafte schematische Darstellung eines Flussdiagrams eines Verfahrens zum Bereitstellen von Bearbeitungsdaten an einer numerisch gesteuerten Werkzeugmaschine gemäß einem Ausführungsbeispiel der Erfindung.

Das Verfahren kann bevorzugt an einer Datenverarbeitungseinrichtung 500 des Bereichs A in Fig. 2 durchgeführt werden.

In einem Schritt S301 werden Bearbeitungsdaten bereitgestellt, die die Bearbeitung von einem oder mehreren Werkstücken an einer Werkzeugmaschine angeben bzw. vorgeben.

Beispielhaft können die Bearbeitungsdaten NC-Daten aufweisen, die z.B. ein oder mehrere NC-Programme umfassen. Das bzw. die NC-Programme geben dabei bevorzugt Bearbeitungsbefehle, Bearbeitungsschritte und/oder Bearbeitungsbahnen vor, die von der Steuerungseinrichtung verarbeitet werden, derart, dass von der Maschinensteuerung der Werkzeugmaschine auf Grundlage des ausgeführten Bearbeitungsprogramms steuerbare Aktoren der Werkzeugmaschine, wie z.B. Achsantriebe, wie z.B. Spindelantriebe und Vorschubachsantriebe oder andere Antriebssysteme der Werkzeugmaschine, gesteuert werden.

Beispielhaft können die Bearbeitungsdaten an der Datenverarbeitungseinrichtung 500 automatisch mit einer CAD/CAM-Anwendung erzeugt werden, z.B. auf Grundlage von ein Fertigteil betreffenden 2D- und/oder 3D-Konstruktionsdaten erzeugt werden, oder auch durch manuelle Programmierung oder manuelle Anpassung eines automatisch erzeugten Bearbeitungsprogramms.

Die Bearbeitungsdaten können weiterhin auf Grundlage von Daten eines ERP-Systems erzeugt oder angepasst werden.

In einem Schritt S302 werden an der Datenverarbeitungseinrichtung 500 des Bereichs A Verschlüsselungsvorgaben vorgegeben.

Die Verschlüsselungsvorgaben können angeben, ob die Bearbeitungsdaten ganz oder teilweise zu verschlüsseln sind, und ob die an die Werkzeugmaschine zu übertragenden Ausführungsdaten ganz oder teilweise zu verschlüsseln sind. Der Bediener der Datenverarbeitungseinrichtung 500 kann z.B. vorgeben, ob bzw. welche Daten bzw. Datenkomponenten verschlüsselt werden sollen. Weiterhin können die Verschlüsselungsvorgaben eine gewünschte oder erforderliche Verschlüsselungsstärke angeben.

Weiterhin können die Verschlüsselungsvorgaben auch ein anzuwendendes Verschlüsselungsverfahren angeben, z.B. ob eine symmetrische oder asymmetrische Verschlüsselung anzuwenden ist, bzw. welches konkrete Verschlüsselungsverfahren anzuwenden ist. Hierbei ist es z.B. für asymmetrische Verschlüsselungsverfahren möglich, ein Public-Key/Private-Key-Verschlüsselungsverfahren vorzugeben, bei dem die zu versendenden Daten mit einem öffentlich verfügbaren Public-Key des Empfängers zu verschlüsseln sind, so dass der Empfänger die empfangenen verschlüsselten Daten mit einem nur dem Empfänger verfügbaren Private-Key entschlüsselt werden können. Weiterhin ist es auch möglich, dass ein auf einem Diffie-Hellmann-Schlüsselaustausch beruhenden Verschlüsselungsverfahren angewendet wird.

Die Verschlüsselungsvorgaben können weiterhin vorgeben, ob der NC-Code des Bearbeitungsprogramms an der graphischen Benutzeroberfläche des Bedienpults entschlüsselbar ist, so dass das NC-Programm an der graphischen Benutzeroberfläche für den Bediener der Werkzeugmaschine teilweise oder vollständig einsehbar ist, oder verdeckt gehalten werden soll, so dass die Entschlüsselung des NC-Codes erst durch das NC-Code-Ausführungssystem direkt bei Ausführen des Bearbeitungsprogramms durchgeführt wird, der das NC-Programm an der graphischen Benutzeroberfläche für den Bediener der Werkzeugmaschine jedoch nicht einsehbar ist.

Die Verschlüsselungsvorgaben können auch vorgeben, ob ein entschlüsselter NC-Code bzw. entschlüsselte Bearbeitungsdaten an der Datenverarbeitungseinrichtung 300 der Werkzeugmaschine dem Bediener der Werkzeugmaschine nur als "Read-Only"-Anzeige zur Verfügung gestellt werden soll, so dass der NC-Code bzw. die Bearbeitungsdaten am Bedienpult der Werkzeugmaschine nicht editierbar bzw. anpassbar sind.

Die Verschlüsselungsvorgaben können weiterhin vorgeben, in welchem Zeitraum die Bearbeitungsdaten und/oder Ausführungsdaten entschlüsselbar sind. Dies kann die Möglichkeit der Ausführung der Bearbeitung auf einen erlaubten Zeitraum bzw. Fertigungszeitraum einschränken, in dem die Fertigung durch Bearbeitung des Werkstücks erlaubt ist.

Neben dem NC-Programm bzw. dem NC-Code der Bearbeitungsdaten können folgende Daten je nach Bedarf verschlüsselt werden: Bilder und/oder 3D-Modelle z.B. in Hinblick auf eine vorgegebene Einspannsituation von Werkzeug und/oder Werkstück, Rohteilinformationen (z.B. Bilder, 3D-Modelle, Geometrieinformationen, Materialinformationen, und/oder Größeninformationen), Daten zu den verwendeten Werkzeugen bzw. Werkzeugdaten, Daten zu vorgegebenen Nullpunkten, CAD-Daten des zu fertigenden Fertigteils (z.B. Bilder und/oder 3D-Modelle), und/oder andere Grafiken, Skizzen, 2D-Zeichungen, 3D-Modelle, Texte oder Dokumente.

In einem optionalen Schritt S303 werden an der Datenverarbeitungseinrichtung 500 des Bereichs A Authentifizierungsvorgaben vorgegeben.

Die Authentifizierungsvorgaben können einen designierten Empfänger angeben und ob bzw. wie der designierte Empfänger zu authentifizieren ist. Die den designierten Empfänger angebenden Authentifizierungsdaten können den Empfänger identifizierende ID-Daten angeben, die z.B. einen Auftragnehmer identifizieren, eine Werkzeugmaschine oder eine Gruppen von Werkzeugmaschinen (z.B. unter den bei dem Auftragnehmer verfügbaren Werkzeugmaschinen) identifizieren (z.B. durch eine Typ-Angabe und/oder Werkzeugmaschinennummer).

Der Bediener der Datenverarbeitungseinrichtung 500 kann somit vorgeben, ob bzw. welche Daten nur für authentifizierte Nutzer extrahierbar sein sollen, und wer bzw. was als authentifizierter Nutzer (erlaubter Empfänger) gelten soll. Hierbei kann der Bediener als erlaubten Empfänger einen Auftraggeber/Nutzer angeben, so dass angegeben bzw. vorgegeben ist, dass nur Werkzeugmaschinen des authentifizierten Auftraggebers/Nutzers die Bearbeitungsdaten ausführen dürfen. Weiterhin kann der Bediener bereits spezielle Werkzeugmaschinen oder Gruppen von Werkzeugmaschinen, z.B. in Abhängigkeit von Typ und Ausstattung der Werkzeugmaschine, als erlaubte Empfänger angeben bzw. vorgeben.

Die Authentifizierungsvorgaben können weiterhin vorgeben, ob die Berechtigung des Empfängers vor Entschlüsselung der Bearbeitungsdaten und/oder vor Bearbeitungsbeginn erstmals oder nochmals durch Authentifizierung zu überprüfen ist oder gar vor Entschlüsselung der Bearbeitungsdaten und/oder vor Bearbeitungsbeginn Authentifizierungsdaten an den Server 400 des Bereichs A zu senden sind, so dass vor Freigabe der Entschlüsselung und/oder des Bearbeitungsbeginns die Authentifizierungsprüfung am Server 400 des Bereichs A durchgeführt wird bzw. werden kann und der Server 400 des Bereichs A vor Entschlüsselung der Bearbeitungsdaten und/oder vor Bearbeitungsbeginn die endgültige Freigabe sendet.

In einem Schritt S304 werden an der Datenverarbeitungseinrichtung 500 des Bereichs A Ausführungsvorgaben vorgegeben.

Die Ausführungsvorgaben können eine oder mehrere Werkzeugmaschinen bzw. Maschinentypen angeben, die die Bearbeitung des Werkstücks durchführen sollen bzw. können. Die Ausführungsdaten können weiterhin angeben, welche Ausrüstung bzw. Ausstattung bei einem speziellen Maschinentypen erforderlich ist, um die Bearbeitung des Werkstücks durchführen zu können. Die Ausführungsdaten können weiterhin angeben, welches Werkzeug erforderlich ist bzw. welche Werkzeuge erforderlich sind, um die Bearbeitung des Werkstücks durchführen zu können.

Die Ausführungsvorgaben können weiterhin einen erlaubten Fertigungszeitraum, in dem die Fertigung eines Fertigteils durch der Bearbeitung eines Werkstücks anhand der Bearbeitungsdaten erlaubt ist, und/oder eine erlaubte Fertigungszahl, d.h. wie viele Fertigteile gefertigt werden können bzw. wie viele Werkstücke anhand der Bearbeitungsdaten bearbeitet werden können, angeben.

Die Ausführungsvorgaben können weiterhin vorgeben, ob die Entschlüsselung der Bearbeitungsdaten, bzw. der Bearbeitungsbeginn und/oder das Bearbeitungsende der Bearbeitung des Werkstücks an den Server 400 des Bereichs A zu melden ist, so dass der Server 400 des Bereichs A die Bearbeitungsvorgänge an externen Werkzeugmaschinen überwachen bzw. beaufsichtigen und den Fortschritt mitverfolgen kann.

In einem Schritt S305 werden an der Datenverarbeitungseinrichtung 500 des Bereichs A die Ausführungsdaten auf Grundlage der vorgegebenen Ausführungsvorgaben und der bereitgestellten Bearbeitungsdaten erzeugt, weiterhin auf Grundlage der vorgegebenen Verschlüsselungsvorgaben und optional der optional vorgegebenen Authentifizierungsvorgaben. Die erzeugten Ausführungsdaten umfassen die Bearbeitungsdaten und weitere Angaben, die die vorgegebenen Ausführungsvorgaben und vorgegebene Verschlüsselungsvorgaben und optional etwaige vorgegebene Authentifizierungsvorgaben angeben.

Da eine Verschlüsselung der Ausführungsdaten vorgesehen ist, je nach eingegebenen Verschlüsselungsvorgaben, wird im Schritt S306 die Verschlüsselung der erzeugten Ausführungsdaten anhand der eingegebenen Verschlüsselungsvorgaben durchgeführt.

Hierbei kann ein dem designierten Empfänger zugeordneter Verschlüsselungs-Schlüssel verwendet werden. Zum Beispiel kann ein dem designierten Empfänger zugeordneter Public-Key zur Verschlüsselung der erzeugten Ausführungsdaten verwendet werden.

Falls der dem designierten Empfänger zugeordnete Verschlüsselungs-Schlüssel bzw. Public-Key nicht vorliegt, kann dieser von dem Server 400 (Zertifikatsserver) des Bereichs B und/oder von dem Server 400 des Bereichs C des designierten Empfängers eingeholt werden.

Hierbei ist es z.B. möglich, dass dem designierten Empfänger, einer Werkzeugmaschine des designierten Empfängers, einer Gruppe von Werkzeugmaschinen des designierten Empfängers, einer oder mehrerer Datenverarbeitungseinrichtungen 300 des designierten Empfängers und/oder dem Server 400 des Bereichs C des designierten Empfängers ein jeweiliger Verschlüsselungs-Schlüssel bzw. Public-Key zugeordnet ist. Dieser kann auch anhand der den Authentifizierungsvorgaben zugrunde liegenden Authentifizierungsdaten eingeholt werden.

Bei Vorliegen des dem designierten Empfänger zugeordneten Verschlüsselungs-Schlüssel bzw. Public-Key bzw. nach Einholen des Verschlüsselungs-Schlüssel bzw. Public-Key wird dieser Verschlüsselungs-Schlüssel bzw. Public-Key in Schritt S306 zur Verschlüsselnd der Ausführungsdaten und/oder der Bearbeitungsdaten verwendet.

Im Schritt S307 werden die entsprechenden Daten, d.h. die erzeugten Ausführungsdaten mit Bearbeitungsdaten, die verschlüsselten, die Bearbeitungsdaten umfassenden Ausführungsdaten und/oder die Ausführungsdaten mit verschlüsselten Bearbeitungsdaten bereitgestellt und/oder über das Netzwerk 700 zu dem Bereich C übertragen (z.B. per E-Mail oder per TCP/IP).

Beispielsweise können die auf einer Datenverarbeitungseinrichtung 500 des Bereichs A erzeugten (und ggf. verschlüsselten) Ausführungsdaten an den Server 400 des Bereichs A übertragen werden. Die Ausführungsdaten können dann auf dem Server 400 des Bereichs A zum Download durch einen der anderen Server 400 bereitgestellt werden (Pull-verfahren), so dass die Ausführungsdaten direkt oder indirekt über den Server des Bereichs B von dem Server 400 des Bereichs A herunterladbar sind. Alternativ können die Ausführungsdaten auch in einem Push-Verfahren an den Server 400 des Bereichs C (oder auch den Server 400 des Bereichs B) übertragen werden.

Die Ausführungsdaten können weiterhin im internen Netzwerk 600 des Bereichs C zur Verfügung gestellt werden, um z.B. von der Datenverarbeitungseinrichtung 500 oder den Datenverarbeitungseinrichtungen 300 des Bereichs C eingeholt zu werden. Alternativ kann der Server 400 des Bereichs C die Ausführungsdaten direkt an die vorgesehene Werkzeugmaschine 100 bzw. an die zu dieser vorgeschaltete Datenverarbeitungseinrichtung 300 des Bereichs C und/oder an die Datenverarbeitungseinrichtung 500 des Bereichs C übersenden (Push-Verfahren).

Alternativ können die Ausführungsdaten per E-Mail an die Ziel-Datenverarbeitungseinrichtung bzw. Zielmaschine oder an den E-Mail-Account eines Bedieners oder Nutzers der Zielwerkzeugmaschine oder des Auftragsnehmers übermittelt werden. Weiterhin können die Ausführungsdaten manuell übergeben werden, z.B. über den Austausch von USB-Speichermedien.

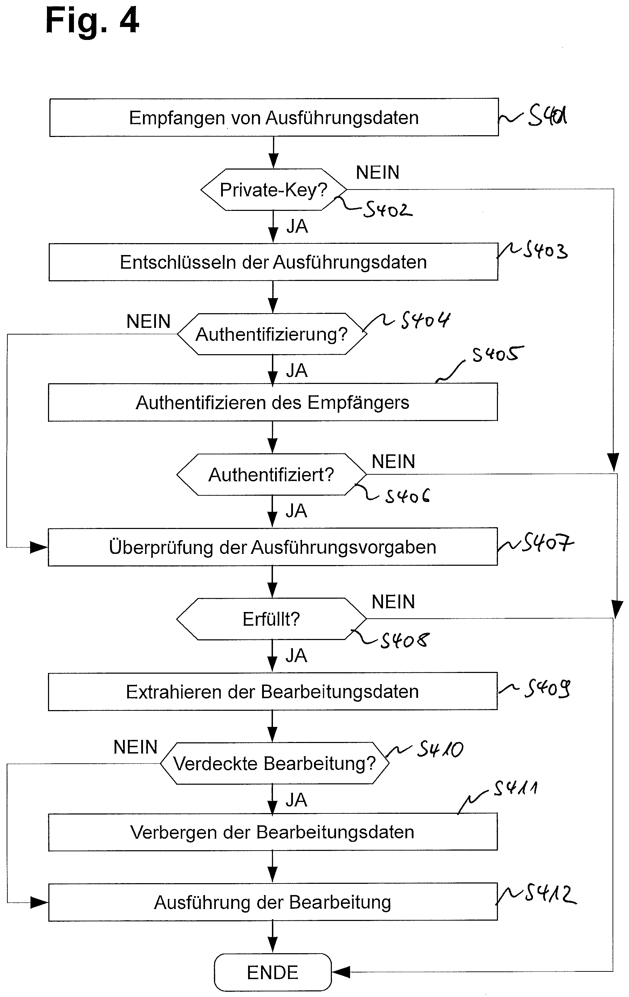

Fig. 4 zeigt eine beispielhafte schematische Darstellung eines Flussdiagrams eines Verfahrens zum Verarbeiten bereitgestellter Bearbeitungsdaten an einer numerisch gesteuerten Werkzeugmaschine gemäß einem Ausführungsbeispiel der Erfindung.

Im Schritt S401 werden die Ausführungsdaten an der Datenverarbeitungseinrichtung 300 der Ziel-Werkzeugmaschine 100 (gemäß Fig. 1) bereitgestellt bzw. empfangen.

Im Schritt S402 wird überprüft, ob ein Private-Key bzw. Verschlüsselungsschlüssel an dem Speichermedium 330 vorliegt (zumindest dann, wenn festgestellt wird, dass die Ausführungsdaten teilweise oder vollständig verschlüsselt sind). Ohne Verschlüsselung der Daten, d.h. wenn die Ausführungsdaten unverschlüsselt empfangen werden, kann dieser Schritt entfallen. Falls kein Private-Key bzw. Verschlüsselungsschlüssel vorliegt und die Ausführungsdaten verschlüsselt empfangen werden, können die Ausführungsdaten nicht entschlüsselt werden und das Verfahren wird abgebrochen/beendet.

Falls ein Private-Key bzw. Verschlüsselungsschlüssel an dem Speichermedium 330 vorliegt (Schritt S402 ergibt JA), dann werden die Ausführungsdaten entschlüsselt in Schritt S403.

Hierbei können nach der Entschlüsselung der Ausführungsdaten die in den Ausführungsdaten umfassten Bearbeitungsdaten extrahiert werden. Die Bearbeitungsdaten können nach Entschlüsselung der Ausführungsdaten bereits unverschlüsselt vorliegen oder noch verschlüsselt sein (z.B. wenn die Entschlüsselung der Bearbeitungsdaten bzw. des enthaltenen NC-Codes erst bei Ausführen an dem NC-Code-Ausführungssystem entschlüsselt werden dürfen.

Weiterhin können nach der Entschlüsselung der Ausführungsdaten die in den Ausführungsdaten optional enthaltenen Authentifizierungsbedingungen bzw. Authentifizierungsvorgaben extrahiert werden. Anhand der extrahierten Authentifizierungsbedingungen kann in Schritt S404 festgestellt werden, ob eine Authentifizierung der Werkzeugmaschine und/oder des Bedieners an der Werkzeugmaschine erforderlich ist.

Falls in Schritt S404 festgestellt wird, dass eine Authentifizierung der Werkzeugmaschine und/oder des Bedieners an der Werkzeugmaschine erforderlich ist (Schritt S404 ergibt JA), wird im Schritt S405 die Authentifizierung des Empfängers (d.h. der Werkzeugmaschine und/oder des Bedieners an der Werkzeugmaschine) durchgeführt.

In Schritt S406 wird festgestellt, ob die Authentifizierung entsprechend den Authentifizierungsvorgaben der Ausführungsdaten erfolgreich erfolgt ist. Falls die Authentifizierung nicht erfolgreich war (Schritt S406 ergibt NEIN), wird die Bearbeitung abgelehnt und das Verfahren wird abgebrochen/beendet.

In Schritt S407 wird beispielhaft nach der erfolgreichen Authentifizierung bzw. falls keine Authentifizierung notwendig ist (Schritt S404 ergibt NEIN) der Schritt S407 ausgeführt, bei dem die Ausführungsvorgaben der Ausführungsdaten überprüft werden.

Anhand der Ausführungsvorgaben kann überprüft werden, ob die Werkzeugmaschine bzw. der Werkzeugmaschinentyp der Werkzeugmaschine, und/oder die Ausrüstung bzw. Ausstattung der Werkzeugmaschine die Ausführungsvorgaben erfüllt. Weiterhin kann überprüft werden, ob die an der Werkzeugmaschine verfügbaren Rohteile und/oder Werkzeuge die Ausführungsvorgaben erfüllen.

Weiterhin kann überprüft werden, ob der momentane Zeitpunkt in dem erlaubten Fertigungszeitraum liegt, in dem die Fertigung eines Fertigteils durch der Bearbeitung eines Werkstücks anhand der Bearbeitungsdaten erlaubt ist, und/oder ob die erlaubte Fertigungszahl noch nicht überschritten wurde, falls die Bearbeitungsdaten bereits zur Bearbeitung anderer Werkstücke verwendet wurden, was an der Datenspeichereinrichtung 300 durch einen Zähler festgehalten werden kann.

Im Schritt S408 wird festgestellt, ob die Ausführungsvorgaben der Ausführungsdaten erfüllt sind. Falls die Ausführungsvorgaben der Ausführungsdaten nicht erfüllt sind (Schritt S408 ergibt NEIN), dann wird die Bearbeitung abgelehnt und das Verfahren wird abgebrochen/beendet.

Falls die Ausführungsvorgaben der Ausführungsdaten erfüllt sind (Schritt S408 ergibt JA), wird im optionalen Schritt S410 überprüft, ob die Verschlüsselungsvorgaben und/oder die Ausführungsvorgaben der Ausführungsdaten angeben, dass die Bearbeitungsdaten verdeckt auszuführen sind, d.h. ob der Bediener der Werkzeugmaschine das Bearbeitungsprogramm bzw. den NC-Code an der graphischen Benutzeroberfläche einsehen darf oder nicht bzw. auch ggf. ob der Bediener der Werkzeugmaschine das Bearbeitungsprogramm bzw. den NC-Code an der graphischen Benutzeroberfläche editieren oder anpassen darf oder nicht.

Falls Schritt S410 JA ergibt, wenn festgestellt wird, dass der Bediener der Werkzeugmaschine das Bearbeitungsprogramm bzw. den NC-Code an der graphischen Benutzeroberfläche nicht einsehen darf bzw. nicht editieren oder anpassen darf, werden die Bearbeitungsdaten vom Bediener vollständig verborgen (Schritt S411) bzw., falls der NC-Code eingesehen aber nicht editiert bzw. angepasst werden darf, nur als Read-Only Version angezeigt.

Im Schritt S412 werden die Bearbeitungsdaten an der Datenverarbeitungseinrichtung 300 ausgeführt, bzw. die Bearbeitung des Werkstücks an der Werkzeugmaschine 100 über die Ausführung an der Datenverarbeitungseinrichtung 300 über die Steuerung 200 gesteuert.

Alternativ kann das Verfahren gemäß Fig. 4 zunächst an der Werkzeugmaschinen-Simulationsanwendung 502 der Datenverarbeitungseinrichtung 500 des Bereichs C ausgeführt werden, wobei hier eine etwaige erlaubte Fertigungszahl oder ein erlaubter Fertigungszeitraum ggf. unberücksichtigt bleiben kann.

In diesem Falle wird der Schritt S412 an der Werkzeugmaschinen-Simulationsanwendung 502 simuliert. Da der Auftragnehmer den NC-Code potentiell nicht einsehen kann, ist es somit vorteilhaft möglich, dass der Auftragnehmer vor der Ausführung der Ausführungsdaten an einer echten Werkzeugmaschine die dort angegebenen, aber ggf. verdeckt umfassten bzw. verschlüsselten Bearbeitungsdaten zunächst an einer entsprechenden virtuellen Werkzeugmaschine in einer Bearbeitungssimulation testet, um die Bearbeitung auf Kollisionen und ggf. auf andere Bearbeitungsprobleme hin zu testen.

Eine derartige Simulation der Bearbeitung mittels einer Werkzeugmaschinen-Simulationsanwendung 502 kann dahingehend eingeschränkt sein, dass die Bearbeitungsdaten nur satzweise an der Werkzeugmaschinen-Simulationsanwendung 502 simulierbar sind.

Bevorzugt müssen Auftragnehmer bzw. Werkzeugmaschinen des Auftragnehmers und Auftraggeber zunächst auf dem Server 400 des Bereichs B registriert werden. Hierbei können auch Verschlüsselungsdaten-Schlüssel bzw. Keys verteilt und verwaltet werden.

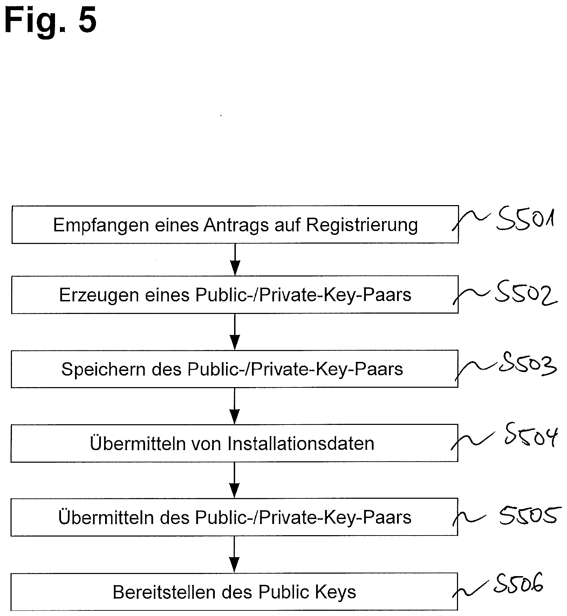

Fig. 5 zeigt eine beispielhafte schematische Darstellung eines Flussdiagrams eines Verfahrens zum Bereitstellen von Verschlüsselungszertifikaten gemäß einem Ausführungsbeispiel der Erfindung.

In Schritt S501 wird ein Antrag auf Registrierung an dem Server 400 des Bereichs B erhalten. Der Server 400 des Bereichs erzeugt dann beispielhaft ein Paar eines Public-Keys und eines dazugehörigen Private-Keys in Schritt S502 und speichert das erzeugte Key-Paar im Schritt S503 zur Verwaltung der Public- und Private-Keys.

Im Schritt S504 werden an den Antragsteller (z.B. eine Datenverarbeitungseinrichtung 300 oder 500 eines der Bereiche A oder C) Installationsdaten übermittelt, wobei die Installationsdaten dazu eingerichtet ist, eine Anwendung einzurichten, die ein Verfahren nach Fig. 3 und/oder nach Fig. 4 ausführen kann.

Im Schritt S505 werden an den Antragsteller (z.B. eine Datenverarbeitungseinrichtung 300 oder 500 eines der Bereiche A oder C) die erzeugten Verschlüsselungs-Schlüssel bzw. Private- und Public-Keys übermittelt.

Weiterhin werden in Schritt S506 die Public-Keys der registrierten Nutzer bereitgestellt, so dass andere die Public-Keys bei Bedarf einholen können, um Ausführungsdaten zur Anwendung bei dem Inhaber des jeweiligen Public-Keys verschlüsseln zu können.

Die Speicherung der Public- und Private-Keys auf dem Server 400 hat den Vorteil, dass auch nach Verlust von Private-Keys bei Teilnehmern etwaige verschlüsselte Daten entschlüsselt werden können, da die Keys zentral von einer unabhängigen Instanz verwaltet werden können.

Weiterhin ist es auch möglich, dass Teilnehmer selbst Public- und Private-Keys erzeugen und ihre Public-Keys direkt gegenseitig tauschen. Ebenso ist es möglich, dass ein Diffie-Hellmann-Verschlüsselungsverfahren eingesetzt wird, bei dem Teilnehmer direkt einen Diffie-Hellmann-Schlüsselaustausch durchführen. Weiterhin können Teilnehmer bzw. Auftraggeber auch selbst ein elektronisches Adressbuch mit Adressdaten führen, welches Zielmaschinen, Auftragnehmer und/oder zugeordnete IP-Adressen speichert.

In weiteren Ausführungsbeispielen können die Ausführungsdaten vor dem Übertragen zusätzlich mit Verifizierungsdaten versehen werden, die eine Überprüfung der Datenintegrität ermöglichen. In derartigen Ausführungsbeispielen kann vor und/oder nach Entschlüsselung, und/oder vor und/oder nach Ausführung der Ausführungs- bzw. Bearbeitungsdaten anhand der Verifizierungsdaten die Datenintegrität der vorliegenden Daten verifiziert werden. Derartige Verifizierungsdaten können z.B. einen oder mehrere Hashwerte aufweisen, die anhand der verschlüsselten und/oder unverschlüsselten Ausführungsdaten und/oder anhand der verschlüsselten und/oder unverschlüsselten Bearbeitungsdaten berechnet werden können.

In weiteren Ausführungsbeispielen kann nach erfolgter Bearbeitung auf Grundlage der Bearbeitungsdaten ein Bearbeitungsbericht erzeugt werden und dem Server 400 des Bereichs A des Auftraggebers bereitgestellt bzw. an diesen übertragen werden. Derartige Bearbeitungsberichte können ebenfalls optional verschlüsselt werden, z.B. mit dem Public-Key des Auftraggebers (dem der entsprechende Private-Key zur Entschlüsselung vorliegt). Der Public-Key des Auftraggebers kann analog zu dem Einholen des Public-Keys der Werkzeugmaschine bzw. des Auftragnehmers von dem Server 400 des Bereichs B eingeholt werden.

Derartige Bearbeitungsberichte können neben den Bearbeitungsinformationen zu Bearbeitungsbeginn und Bearbeitungsende zudem angeben, ob Steuerungsfehler bei der Bearbeitung aufgetreten sind. Zudem können in Bearbeitungsberichten auch Informationen über zum Bearbeitungszeitraum erfasste Sensorwerte der Sensoren 120 der Werkzeugmaschine bzw. zu Positionsmessresultaten (z.B. durch Messtaster) angegeben sein. Somit können die Auftraggeber eine externe Qualitätsprüfung durchführen.

In weiteren Ausführungsbeispielen können die Bearbeitungsdaten auf Seite des Auftragnehmers nicht nur verschlüsselt, verborgen und/oder als Read-Only-Version zur Verfügung stehen, sondern es können weiterhin Kopierschutzmechanismen vorgesehen sein, derart dass die Bearbeitungsdaten nicht kopierbar sind.

In weiteren Ausführungsbeispielen können die Ausführungsdaten auf dem Server 400 des Bereichs B zwischengespeichert werden und/oder langzeitgespeichert werden.

Die vorliegende Erfindung ermöglicht vorteilhaft, dass das bei dem Erzeuger der Bearbeitungsdaten bzw. dem Auftraggeber vorliegende Know-How schützbar ist und dennoch effizient und sicher Bearbeitungsdaten an externe Auftragnehmer übermittelt werden können, zur Ausführung der Bearbeitung an externen Werkzeugmaschinen bei den externen Auftragnehmern, wobei gleichzeitig sichergestellt sein kann, dass die Bearbeitungs- und Ausführungsvorgaben eingehalten werden müssen und die Daten auch geschützt sind. Die Datenübertragung an die Werkzeugmaschine kann vorteilhaft End-To-End verschlüsselt werden und ist geschützt, wobei die Datenintegrität sichergestellt werden kann.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

## Patentansprüche

1. Verfahren zum Bereitstellen von Bearbeitungsdaten an einer numerisch gesteuerten Werkzeugmaschine, umfassend:
- Bereitstellen (S301) von Bearbeitungsdaten an einer Datenverarbeitungseinrichtung, wobei die Bearbeitungsdaten numerische Steuerungsdaten, insbesondere ein oder mehrere NC-Programme, umfassen, auf deren Grundlage eine Bearbeitung eines Werkstücks an der numerisch gesteuerten Werkzeugmaschine ausführbar ist,
- Vorgeben von Verschlüsselungsvorgaben (S302) an der Datenverarbeitungseinrichtung, die Vorgaben für die Verschlüsselung der Bearbeitungsdaten und von Ausführungsdaten vorgeben, wobei die Verschlüsselungsvorgaben eine maximale Anzahl von erlaubten Entschlüsselungen der verschlüsselten Ausführungsdaten und eine maximale Anzahl von Ausführungen der Bearbeitungsdaten angeben,
- Vorgeben (S304) von Ausführungsvorgaben an der Datenverarbeitungseinrichtung, die Vorgaben für die Bearbeitung des Werkstücks an der numerisch gesteuerten Werkzeugmaschine angeben, wobei die Ausführungsvorgaben einen zulässigen Werkzeugmaschinentyp oder eine zulässige Werkzeugmaschine angeben, und/oder wobei die Ausführungsvorgaben eine erforderliche Maschinenausrüstung der Werkzeugmaschine, ein oder mehrere erforderliche Werkzeuge, und Werkstückdaten angeben,
- Erzeugen von Ausführungsdaten (S305) auf Grundlage der vorgegebenen Ausführungsvorgaben, der bereitgestellten Bearbeitungsdaten und der vorgegebenen Verschlüsselungsvorgaben, wobei die erzeugten Ausführungsdaten die Bearbeitungsdaten und weitere Angeben, die die vorgegebenen Ausführungsdaten und die vorgegebenen Verschlüsselungsvorgaben umfassen, umfassen,
- Verschlüsseln (S306) der erzeugten Ausführungsdaten auf Grundlage der Verschlüsselungsvorgaben, und
- Bereitstellen oder Übertragen der verschlüsselten Ausführungsdaten (S307) an einer/eine Steuerungseinrichtung der numerisch gesteuerten Werkzeugmaschine.

2. Verfahren gemäß Anspruch 1, **dadurch gekennzeichnet, dass**
das Verschlüsseln der Ausführungsdaten mittels eines der numerisch gesteuerten Werkzeugmaschine zugeordneten Public-Keys in einem asymmetrischen Verschlüsselungsverfahren ausgeführt wird.

3. Verfahren gemäß Anspruch 1 oder 2, **dadurch gekennzeichnet, dass**
die Verschlüsselungsvorgaben angeben, welche Abschnitte der Bearbeitungsdaten zu verschlüsseln sind.

4. Verfahren gemäß einem der vorstehenden Ansprüche, **dadurch gekennzeichnet, dass**
die Verschlüsselungsvorgaben einen erlaubten Zeitraum angeben, in dem die verschlüsselten Bearbeitungsdaten und/oder Ausführungsdaten entschlüsselbar sind.

5. Verfahren gemäß einem der vorstehenden Ansprüche, **dadurch gekennzeichnet, dass**
die Verschlüsselungsvorgaben angeben, ob die verschlüsselten Ausführungsdaten nur direkt bei Anwendung in einem NC-Code-Ausführungssystem der Steuerungseinrichtung der numerisch gesteuerten Werkzeugmaschine entschlüsselbar sind.

6. Verfahren gemäß einem der vorstehenden Ansprüche, **dadurch gekennzeichnet, dass**
die Verschlüsselungsvorgaben angeben, ob die Bearbeitungsdaten an einer graphischen Benutzeroberfläche der Steuerungseinrichtung der numerisch gesteuerten Werkzeugmaschine einsehbar und/oder editierbar sind.

7. Verfahren gemäß einem der vorstehenden Ansprüche, **dadurch gekennzeichnet, dass**
die Verschlüsselungsvorgaben und/oder die Ausführungsvorgaben angeben, ob die Steuerungseinrichtung der numerisch gesteuerten Werkzeugmaschine vor und/oder nach Bearbeitung des Werkstücks auf Grundlage der Bearbeitungsdaten eine Meldung an die Datenverarbeitungseinrichtung sendet.

8. Verfahren gemäß einem der vorstehenden Ansprüche, **dadurch gekennzeichnet, dass**
die Verschlüsselungsvorgaben und/oder die Ausführungsvorgaben angeben, ob die Steuerungseinrichtung der numerisch gesteuerten Werkzeugmaschine nach Bearbeitung des Werkstücks auf Grundlage der Bearbeitungsdaten Bearbeitungsberichtsdaten an die Datenverarbeitungseinrichtung sendet.

9. Verfahren gemäß einem der vorstehenden Ansprüche, **dadurch gekennzeichnet, dass**
die Verschlüsselungsvorgaben und/oder die Ausführungsvorgaben angeben, ob die Steuerungseinrichtung der numerisch gesteuerten Werkzeugmaschine vor Entschlüsselung der verschlüsselten Ausführungsdaten einen Berechtigungsantrag an die Datenverarbeitungseinrichtung sendet, zur Freigabe des Entschlüsselns durch die Datenverarbeitungseinrichtung nach erfolgter Berechtigungsüberprüfung.

10. Verfahren gemäß einem der vorstehenden Ansprüche, **gekennzeichnet durch**:
- Einholen eines der Werkzeugmaschine zugeordneten Public-Keys oder anderer der Werkzeugmaschine zugeordneten Schlüsseldaten von einem externen Server (400), wobei die Ausführungsdaten anhand des von dem Server eingeholten Public-Keys oder der von dem Server eingeholten Schlüsseldaten verschlüsselt werden.

11. Verfahren gemäß einem der vorstehenden Ansprüche, **gekennzeichnet durch**:
- Vorgeben von Authentifizierungsvorgaben (S303) an der Datenverarbeitungseinrichtung, die Vorgaben für die Authentifizierung der numerischen Werkzeugmaschine und/oder eines Bedieners der Werkzeugmaschine angeben, und
wobei die Ausführungsdaten weiterhin Angaben umfassen, die die Authentifizierungsvorgaben angeben.

12. Verfahren gemäß einem der vorstehenden Ansprüche, weiterhin umfassend:
- Empfangen der verschlüsselten Ausführungsdaten an der Steuerungseinrichtung (200) der numerisch gesteuerten Werkzeugmaschine (100),
- Entschlüsseln der Ausführungsdaten auf Grundlage der in den Ausführungsdaten umfassten Ausführungsvorgaben, und
- Ausführen der Bearbeitungsdaten, insbesondere umfassend das Steuern der Bearbeitung des an der numerisch gesteuerten Werkzeugmaschine auf Grundlage der Bearbeitungsdaten.

13. System zum Bereitstellen von Bearbeitungsdaten an einer numerisch gesteuerten Werkzeugmaschine (100), das System umfassend
eine Steuerung (200) der Werkzeugmaschine (100),
eine Datenverarbeitungseinrichtung (300, 500), die mit der Steuerung (200) der Werkzeugmaschine (100) verbunden ist,
und einen Server (400), der über ein Kommunikationsnetzwerk (600, 700) mit der Steuerung (200) der Werkzeugmaschine (100) verbunden ist,
wobei das System dazu eingerichtet ist, ein Verfahren gemäß einem der vorstehenden Ansprüche 1 bis 12 auszuführen.

14. Computerprogrammprodukt, umfassend Befehle, die bei der Ausführung des Programms durch einen Computer diesen veranlassen, das Verfahren gemäß einem der vorstehenden Ansprüche 1 bis 12 auszuführen.

## Claims

1. Method for providing machining data to a numerically controlled machine tool, comprising:
- providing (S301) machining data to a data processing device, wherein the machining data comprise numerical control data, in particular one or more NC programs, on the basis of which machining of a workpiece is implementable on the numerically controlled machine tool,
- specifying encryption specifications (S302) at the data processing device, which specify specifications for the encryption of the machining data and of execution data, wherein the encryption specifications specify a maximum number of permitted decryptions of the encrypted execution data and a maximum number of executions of the machining data,
- specifying (S304) execution specifications at the data processing device, which specify specifications for the machining of the workpiece on the numerically controlled machine tool, wherein the execution specifications specify a permitted machine tool type or a permitted machine tool, and/or wherein the execution specifications specify required machine equipment of the machine tool, one or more required tools, and workpiece data,
- generating execution data (S305) on the basis of the specified execution specifications, the provided machining data and the specified encryption specifications, wherein the generated execution data comprise the machining data and further specifications which comprise the specified execution data and the specified encryption specifications,
- encrypting (S306) the generated execution data on the basis of the encryption specifications, and
- providing or transmitting the encrypted execution data (S307) to a/a control device of the numerically controlled machine tool.

2. Method according to Claim 1, **characterized in that**
the encryption of the execution data is carried out by means of a public key assigned to the numerically controlled machine tool in an asymmetric encryption method.

3. Method according to Claim 1 or 2, **characterized in that**
the encryption specifications specify which sections of the machining data are to be encrypted.

4. Method according to one of the preceding claims, **characterized in that**
the encryption specifications specify a permitted time period in which the encrypted machining data and/or execution data is decryptable.

5. Method according to one of the preceding claims, **characterized in that**
the encryption specifications specify whether the encrypted execution data is decryptable only directly when used in an NC code execution system of the control device of the numerically controlled machine tool.

6. Method according to one of the preceding claims, **characterized in that**
the encryption specifications specify whether the machining data is viewable and/or editable on a graphical user interface of the control device of the numerically controlled machine tool.

7. Method according to one of the preceding claims, **characterized in that**
the encryption specifications and/or the execution specifications specify whether the control device of the numerically controlled machine tool sends a message to the data processing device before and/or after machining of the workpiece on the basis of the machining data.

8. Method according to one of the preceding claims, **characterized in that**
the encryption specifications and/or the execution specifications specify whether the control device of the numerically controlled machine tool sends machining report data to the data processing device after machining of the workpiece on the basis of the machining data.

9. Method according to one of the preceding claims, **characterized in that**
the encryption specifications and/or the execution specifications specify whether the control device of the numerically controlled machine tool sends an authorization request to the data processing device before decryption of the encrypted execution data, in order to enable the decryption by the data processing device after an authorization check has been carried out.

10. Method according to one of the preceding claims, **characterized by**:
- obtaining a public key assigned to the machine tool or other key data assigned to the machine tool from an external server (400), wherein the execution data are encrypted on the basis of the public key obtained from the server or the key data obtained from the server.

11. Method according to one of the preceding claims, **characterized by**:
- specifying authentication specifications (S303) at the data processing device, which specify specifications for the authentication of the numerical machine tool and/or of an operator of the machine tool, and
wherein the execution data furthermore comprise specifications which specify the authentication specifications.

12. Method according to one of the preceding claims, furthermore comprising:
- receiving the encrypted execution data at the control device (200) of the numerically controlled machine tool (100),
- decrypting the execution data on the basis of the execution specifications comprised in the execution data, and
- executing the machining data, in particular comprising controlling the machining of the workpiece on the numerically controlled machine tool on the basis of the machining data.

13. System for providing machining data on a numerically controlled machine tool (100), the system comprising
a controller (200) of the machine tool (100),
a data processing device (300, 500), which is connected to the controller (200) of the machine tool (100),
and a server (400), which is connected to the controller (200) of the machine tool (100) via a communication network (600, 700),
wherein the system is set up to carry out a method according to one of the preceding Claims 1 to 12.

14. Computer program product, comprising instructions which, when the program is executed by a computer, cause the latter to carry out the method according to one of the preceding Claims 1 to 12.

## Revendications

1. Procédé de mise à disposition de données d'usinage sur une machine-outil à commande numérique, comprenant :
- la mise à disposition (S301) de données d'usinage sur un dispositif de traitement de données, les données d'usinage comprenant des données de commande numérique, en particulier un ou plusieurs programmes NC, sur la base desquels un usinage d'une pièce à usiner peut être exécuté sur la machine-outil à commande numérique,
- la spécification de spécifications de cryptage (S302) sur le dispositif de traitement de données, qui spécifient des spécifications pour le cryptage des données d'usinage et de données d'exécution, les spécifications de cryptage indiquant un nombre maximal de décryptages autorisés des données d'exécution cryptées et un nombre maximal d'exécutions des données d'usinage,
- la spécification (S304) de spécifications d'exécution sur le dispositif de traitement de données, qui spécifient des spécifications pour l'usinage de la pièce à usiner sur la machine-outil à commande numérique, les spécifications d'exécution indiquant un type de machine-outil autorisé ou une machine-outil autorisée, et/ou les spécifications d'exécution indiquant un équipement de machine requis de la machine-outil, un ou plusieurs outils requis et des données de pièce à usiner,
- la génération de données d'exécution (S305) sur la base des spécifications d'exécution spécifiées, des données d'usinage mises à disposition et des spécifications de cryptage spécifiées, les données d'exécution générées comprenant les données d'usinage et d'autres spécifications comprenant les spécifications d'exécution spécifiées et les spécifications de cryptage spécifiées,
- le cryptage (S306) des données d'exécution générées sur la base des spécifications de cryptage, et
- la mise à disposition ou la transmission des données d'exécution cryptées (S307) à un/un dispositif de commande de la machine-outil à commande numérique.

2. Procédé selon la revendication 1, **caractérisé en ce que**
le cryptage des données d'exécution est effectué au moyen d'une clé publique associée à la machine-outil à commande numérique dans un procédé de cryptage asymétrique.

3. Procédé selon la revendication 1 ou 2, **caractérisé en ce que**
les spécifications de cryptage indiquent quelles sections des données d'usinage doivent être cryptées.

4. Procédé selon l'une quelconque des revendications précédentes, **caractérisé en ce que**
les spécifications de cryptage indiquent une période de temps autorisée pendant laquelle les données d'usinage cryptées et/ou les données d'exécution cryptées peuvent être décryptées.

5. Procédé selon l'une quelconque des revendications précédentes, **caractérisé en ce que**
les spécifications de cryptage indiquent si les données d'exécution cryptées ne peuvent être décryptées que directement lors de l'utilisation dans un système d'exécution de code NC du dispositif de commande de la machine-outil à commande numérique.

6. Procédé selon l'une quelconque des revendications précédentes, **caractérisé en ce que**
les spécifications de cryptage indiquent si les données d'usinage peuvent être visualisées et/ou éditées sur une interface utilisateur graphique du dispositif de commande de la machine-outil à commande numérique.

7. Procédé selon l'une quelconque des revendications précédentes, **caractérisé en ce que**
les spécifications de cryptage et/ou les spécifications d'exécution indiquent si le dispositif de commande de la machine-outil à commande numérique envoie un message au dispositif de traitement de données avant et/ou après l'usinage de la pièce à usiner sur la base des données d'usinage.

8. Procédé selon l'une quelconque des revendications précédentes, **caractérisé en ce que**
les spécifications de cryptage et/ou les spécifications d'exécution indiquent si le dispositif de commande de la machine-outil à commande numérique envoie des données de rapport d'usinage au dispositif de traitement de données après l'usinage de la pièce à usiner sur la base des données d'usinage.

9. Procédé selon l'une quelconque des revendications précédentes, **caractérisé en ce que**
les spécifications de cryptage et/ou les spécifications d'exécution indiquent si le dispositif de commande de la machine-outil à commande numérique envoie une demande d'autorisation au dispositif de traitement de données avant le décryptage des données d'exécution cryptées, pour la libération du décryptage par le dispositif de traitement de données après la vérification d'autorisation effectuée.

10. Procédé selon l'une quelconque des revendications précédentes, **caractérisé par** :
- l'obtention d'une clé publique associée à la machine-outil ou d'autres données de clé associées à la machine-outil à partir d'un serveur externe (400), les données d'exécution étant cryptées à l'aide de la clé publique obtenue à partir du serveur ou des données de clé obtenues à partir du serveur.

11. Procédé selon l'une quelconque des revendications précédentes, **caractérisé par** :
- la spécification de spécifications d'authentification (S303) sur le dispositif de traitement de données, qui spécifient des spécifications pour l'authentification de la machine-outil numérique et/ou d'un opérateur de la machine-outil, et
les données d'exécution comprenant en outre des spécifications qui spécifient les spécifications d'authentification.

12. Procédé selon l'une quelconque des revendications précédentes, comprenant en outre :
- la réception des données d'exécution cryptées sur le dispositif de commande (200) de la machine-outil à commande numérique (100),
- le décryptage des données d'exécution sur la base des spécifications d'exécution comprises dans les données d'exécution, et
- l'exécution des données d'usinage, en particulier comprenant la commande de l'usinage de la pièce à usiner sur la machine-outil à commande numérique sur la base des données d'usinage.

13. Système de mise à disposition de données d'usinage sur une machine-outil à commande numérique (100), le système comprenant
une commande (200) de la machine-outil (100),
un dispositif de traitement de données (300, 500), qui est relié à la commande (200) de la machine-outil (100),
et un serveur (400), qui est relié par le biais d'un réseau de communication (600, 700) à la commande (200) de la machine-outil (100),
dans lequel le système est conçu pour mettre en oeuvre un procédé selon l'une quelconque des revendications précédentes 1 à 12.

14. Produit de programme informatique, comprenant des instructions qui, lors de l'exécution du programme par un ordinateur, amènent celui-ci à mettre en oeuvre le procédé selon l'une quelconque des revendications précédentes 1 à 12.
